# EUROPEAN PATENT APPLICATION

(11) **EP 1 634 732 A1**
(43) Date of publication of application: **15.03.2006**
(21) Application number: 05255091.0
(22) Date of filing: 17.08.2005
(51) Int. Cl.: B60G 17/016, B60G 21/055

(54) **Actuator for an adjustable stabilizer apparatus**

(30) Priority: 08.09.2004 JP 2004260791
(71) Applicant: Toyota Jidosha Kabushiki Kaisha, Toyota-shi, Aichi-ken 471-8571 (JP)
(72) Inventor: Matsumoto, Shin, Toyota Jidosha Kabushiki Kaisha, Toyota-shi Aichi-ken 471-8571 (JP)
(74) Representative: Pratt, Richard Wilson

(57) **Abstract**

A stabilizer apparatus (10; 198) for a vehicle comprising: a pair of stabilizer bars (40, 40L, 40R) which are rotatably supported by respective two support portions (54) disposed on a body (21) of the vehicle to be away from each other and which are disposed such that proximal ends of the pair of stabilizer bars are opposed to each other; and an actuator (42; 200) which includes: (a) a housing (70; 201) having a generally cylindrical shape; (b) a motor (84; 202) disposed inside the housing near to one of opposite end portions thereof; and (c) a decelerator (74; 204) which is disposed inside the housing near to the other of the opposite end portions thereof so as to be connected to the motor and which has an output portion (92; 224), the housing being unrotatably connected to the proximal end of one of the pair of stabilizer bars while the output portion of the decelerator is connected to the proximal end of the other of the pair of stabilizer bars, thereby enabling the pair of stabilizer bars to be connected to each other by the actuator to be rotatably driven relative to each other, the stabilizer apparatus being characterized in that:
the motor and the decelerator are disposed to be spaced apart from each other with a predetermined spacing distance therebetween.

## Description

### BACKGROUND OF THE INVENTION

### Field of the Invention

The present invention relates in general to a stabilizer apparatus equipped with a power source for controlling an attitude or a posture of a body of a vehicle.

### Discussion of Related Art

An ordinary vehicle is equipped with a stabilizer apparatus for reducing or restraining rolling of a body of the vehicle. In general, the stabilizer apparatus has a stabilizer bar which is rotatably supported by the vehicle body and connected at its opposite ends to a left and a right wheels, respectively. The stabilizer bar is twisted depending upon an amount of rolling of the vehicle body to generate an elastic force, thereby stabilizing an attitude of the vehicle body when the rolling of the vehicle body occurs. Recently, for more effectively controlling the attitude of the vehicle body, it is proposed to permit the stabilizer to positively exhibit a force to restrain the rolling of the vehicle body by providing the stabilizer apparatus with a power source such as a motor. For instance, JP-A-2002-518245 discloses a stabilizer apparatus in which a pair of stabilizer bars obtained by dividing a stabilizer bar into two parts are rotated relative to each other by an actuator having a motor and a decelerator.

### SUMMARY OF THE INVENTION

In the disclosed stabilizer apparatus, however, the actuator is supported by the pair of stabilizer bars which are in turn rotatably supported by respective two support portions disposed on the vehicle body. Therefore, the disclosed stabilizer apparatus may suffer from a problem that the actuator vibrates or oscillates due to shaking of the vehicle body such as bouncing, pitching, swinging and the like. The stabilizer apparatus equipped with the actuator tends to suffer form such a problem, leaving room for an improvement of such a stabilizer apparatus. Namely, by improving the stabilizer apparatus equipped with the actuator, it is possible to increase its utility. Embodiments of this invention have been developed in the light of the situations described above.

An embodiment of the invention seeks to provide a stabilizer apparatus having an actuator which connects a pair of stabilizer bars to each other such that the pair of stabilizer bars are rotatably driven relative to each other by the actuator and which includes a motor and a decelerator, the stabilizer apparatus being characterized in that the motor and the decelerator are spaced apart from each other.

In the stabilizer apparatus constructed according to the present invention, the motor and the decelerator of the actuator are disposed so as to be spaced apart from each other. As compared with an arrangement in which the motor and the decelerator are disposed adjacent to each other, the length of the actuator as measured in its axial direction (in detail, the length of the housing of the actuator as measured in the axial direction) can be made large in the present arrangement, whereby the vibration of the actuator can be reduced or restrained. Further, in the present arrangement wherein the motor and the decelerator are spaced apart from each other, the heavy components (i.e., the motor and the decelerator) can be disposed while being distributed in the axial direction of the actuator, leading to a reduction in the vibration of the actuator. It is noted that various forms of the stabilizer apparatus of the present invention and effects of the forms will be explained in detail in the following "FORMS OF INVENTION".

### FORMS OF INVENTION

There will be described in detail various forms of an invention. Each of the forms of the invention is numbered like the appended claims and depends from the other form or forms, where appropriate, for easier understanding of the invention. It is to be understood that the invention is not limited to the technical features or any combinations thereof which will be described, and shall be construed in the light of the following descriptions of the various forms and preferred embodiments of the invention. It is to be further understood that a plurality of elements or features included in any one of the following forms of the invention are not necessarily provided all together, and that the invention may be embodied with selected at least one of the elements or features described with respect to the same form.

(1) A stabilizer apparatus for a vehicle comprising:
a pair of stabilizer bars which are rotatably supported by respective two support portions, which in use are disposed on a body of the vehicle, to be away from each other and which are disposed such that proximal ends of the pair of stabilizer bars are opposed to each other; and
an actuator which includes: (a) a housing having a generally cylindrical shape; (b) a motor disposed inside the housing near to one of opposite end portions thereof, and (c) a decelerator which is disposed inside the housing near to the other of the opposite end portions thereof so as to be connected to the motor and which has an output portion, the housing being unrotatably connected to the proximal end of one of the pair of stabilizer bars while the output portion of the decelerator is connected to the proximal end of the other of the pair of stabilizer bars, thereby enabling the pair of stabilizer bars to be connected to each other by the actuator to be rotatably driven relative to each other, the motor and the decelerator being disposed to be spaced apart from each other with a predetermined spacing distance therebetween.

In the conventionally proposed actuator, the motor and the decelerator are disposed adjacent to each other, so that such an actuator is compact in size and simple in structure. In a case where the actuator is supported by a stabilizer bar, however, the actuator vibrates or oscillates in a direction intersecting the axis of the stabilizer bar, due to shaking of the vehicle body. The vibration of the actuator may deteriorate comfortableness as felt by users (such as silence) or cause a risk that the actuator hits or bumps the vehicle body, etc., due to increased amplitude of the actuator during traveling on a bumpy road, for instance. For reducing the vibration of the actuator, it is considered, for instance, that the rigidity of the stabilizer bar is increased by increasing its diameter. In this case, however, the spring constant of the bar in a direction of twisting thereof is also increased. This is not desirable from a design standpoint. Even if the position of the actuator in which the motor and the decelerator are disposed adjacent to each other is changed, e.g., even if the actuator is located at a position which is nearer to one of the two support portions than a middle position between the two support portions, a distance between the actuator and the other of the two support portions is inevitably increased. Accordingly, the vibration of the actuator may not be reduced to a sufficient extent.

In contrast, in the actuator according to the above-indicated form (1), the motor and the decelerator are disposed to be spaced apart from each other. As compared with the conventional actuator in which the motor and the decelerator are disposed adjacent to each other, the axial length of the actuator (in detail, the axial length of the housing) is increased and respective distances between the actuator and the two support portions are decreased, thereby easily reducing the vibration of the actuator. More specifically described, it is possible to reduce amplitude of the actuator when it vibrates in a direction intersecting an axis thereof, for instance. In the actuator according to the form (1), the motor and the decelerator are disposed to be spaced apart from each other, whereby the heavy components (i.e., the motor and the decelerator) can be disposed while being distributed in the axial direction of the actuator. Accordingly, the vibration of the actuator can be reduced.

Each of the pair of stabilizer bars according to the form (1) is connected at one end thereof to the actuator and at the other end thereof to the corresponding one of the wheels. It may be considered that each of the pair of stabilizer bars is obtained by dividing a generally available elongated "U"-shaped stabilizer bar at its lengthwise middle portion or a portion near to the middle portion. Described more specifically, each of the pair of stabilizer bars according to the form (1) may be arranged to have a torsion portion supported by the corresponding support portion so as to be rotatable about the axis thereof and an arm portion extending from the torsion portion in a direction intersecting the torsion portion. In this arrangement, where the pair of stabilizer bars are installed on the vehicle such that the respective two torsion portions of the pair of stabilizer bars are supported by the respective support portions so as to be rotatable about a straight line connecting the two support portions as a rotation axis while respective leading ends of the two arm portions (i.e., the other ends of the pair of stabilizer bars) are connected to the corresponding wheels, each of the two arm portions can pivot in accordance with a change in a distance between the vehicle body and the corresponding wheel, namely, each of the pair of stabilizer bars can rotate about the above-indicated rotation axis. In the thus installed stabilizer bars, by rotating each of the pair of stabilizer bars about the rotation axis, in other words, by twisting the pair of stabilizer bars, it is possible to generate a force by which the wheels approach toward and separate from the vehicle body. By appropriately controlling the force, the rolling of the vehicle body can be restrained, for instance. In the actuator according to the form (1), the housing and the output portion of the decelerator are rotated relative to each other, whereby the pair of stabilizer bars respectively connected to the housing and the output portion of the decelerator can be rotated relative to each other, i.e., twisted, so that the attitude of the vehicle can be stabilized.

The stabilizer apparatus according to the form (1) including the pair of stabilizer bars (i.e., a right-side bar and a left-side bar) and the actuator is disposed on a front side or a rear side of the vehicle such that the pair of stabilizer bars correspond to a left and a right wheels, respectively. The stabilizer apparatus according to the form (1) may be disposed on both of the front side and the rear side of the vehicle. The structure of the motor in the apparatus according to the form (1) is not particularly limited. For instance, there may be used a motor which is equipped with brushes and in which a rotor having a coil is rotated. Further, a motor (a brushless motor) may be used in which a rotor constituted by a permanent magnet is rotated by an electric field of a stator constituted by including a coil. The decelerator in the apparatus according to the form (1) is not particularly limited, but any kinds of decelerator may be used such as those employing HARMONIC DRIVE® (trademark) mechanism, a planetary gear mechanism, or the like.

(2) The stabilizer apparatus according to the above form (1), wherein the actuator further includes a drive-force transmitting member via which the decelerator is connected to the motor and which is disposed between the motor and the decelerator for transmitting a drive force of the motor to an input portion of the decelerator.

The drive-force transmitting member is not particularly limited. For instance, the drive-force transmitting member may be a shaft-like member, a cylindrical member, a wire-like member, or the like.

(3) The stabilizer apparatus according to the above form (1) or (2), wherein the spacing distance between the motor and the decelerator is not smaller than 25% of a length of the housing.

In the above-indicated form (3), the spacing distance between the motor and the decelerator is defined on the basis of the length of the housing. Where the spacing distance is not smaller than 25% of the length of the housing, the vibration of the actuator can be effectively reduced. Where the spacing distance is not smaller than 40% of the length of the housing, the vibration of the actuator can be more effectively reduced.

(4) The stabilizer apparatus according to any one of the above forms (1)-(3), wherein the spacing distance between the motor and the decelerator is not smaller than 15% of a distance (W) by which the two support portions are away from each other.

In the above-indicated form (4), the spacing distance between the motor and the decelerator is defined on the basis of the distance between the two support portions. The spacing distance of not smaller than 15% of the distance between the two support portions is effective to reduce the vibration of the actuator. Where the spacing distance is not smaller than 30% of the distance between the two support portions, the vibration of the actuator can be more effectively reduced.

(5) The stabilizer apparatus according to any one of the above forms (1)-(4), wherein the housing includes: a motor housing portion in which the motor is disposed; a decelerator housing portion in which the decelerator is disposed; and a small-diameter portion located between the motor housing portion and the decelerator housing portion and having an outside diameter smaller than outside diameters of the motor housing portion and the decelerator housing portion.

In a case where the actuator is disposed at a lower portion of the vehicle, a ground clearance of the vehicle body in the vicinity of a middle portion between the right and left wheels can be made large, by providing the small-diameter portion between the motor housing portion and the decelerator housing portion. Accordingly, this arrangement increases the running ability of the vehicle in a case where the vehicle travels on a road which is ridged at its middle portion due to ruts or tracks, for instance. In addition, the provision of the small-diameter portion leads to in an increase in the surface area of the motor housing portion, for instance, whereby the heat generated by the motor can be dissipated owing to the housing with high efficiency. Furthermore, depending upon cases, the weight of the actuator can be decreased.

(6) The stabilizer apparatus according to the above form (5), wherein the outside diameter of the small-diameter portion is smaller than outside diameters of the motor and the decelerator.

Because it is not necessary to dispose the motor and the decelerator in the small-diameter portion, the outside diameter of the small-diameter portion can be made smaller than the outside diameters of the motor and the decelerator.

(7) The stabilizer apparatus according to the above form (5) or (6), wherein the outside diameter of the small-diameter portion is not greater than 75% of a smaller one of the outside diameters of the motor housing portion and the decelerator housing portion.

Where the outside diameter of the small-diameter portion is not greater than 75% of a smaller one of the outside diameters of the motor housing portion and the decelerator housing portion, the ground clearance of the vehicle body in the vicinity of the middle portion between the right and left wheels can be made large. Where the outside diameter of the small-diameter portion is not greater than 60% of a smaller one of the outside diameters of the motor housing portion and the decelerator housing portion, the above-indicated ground clearance can be made larger.

(8) The stabilizer apparatus according to any one of the above forms (5)-(7), wherein the small-diameter portion has a length which is not smaller than 25% of a length of the housing.

In the above-indicated form (8), the length of the small-diameter portion is defined on the basis of the length of the housing. Where the length of the small-diameter portion is not smaller than 25% of the length of the housing, the vibration of the actuator can be effectively reduced. Where the length of the small-diameter portion is not smaller than 40% of the length of the housing, the vibration of the actuator can be more effectively reduced.

(9) The stabilizer apparatus according to any one of the above forms (5)-(7), wherein the small-diameter portion has a length which is not smaller than 15% of a distance by which the two support portions are away from each other.

In the above-indicated form (9), the length of the small-diameter portion is defined on the basis of the distance between the two support portions. Where the length of the small-diameter portion is not smaller than 15% of the distance between the two support portions, it is possible to effectively reduce the vibration of the actuator. Where the length of the small-diameter portion is not smaller than 30% of the distance between the two support portions, it is possible to more effectively reduce the vibration of the actuator.

(10) The stabilizer apparatus according to any one of the above forms (1)-(9), wherein each of distances between the opposite end portions of the housing and the corresponding support portions is not greater than 20% of a distance by which the two support portions are away from each other.

Where each of the distances between the opposite end portions of the housing and the corresponding support portions is not greater than 20%, the vibration of the actuator can be effectively reduced. The effect of reduction in the vibration of the actuator increases with a decrease in the distance (e.g., not greater than 15%, not greater than 10%, and not greater than 5%).

(11) The stabilizer apparatus according to any one of the above forms (1)-(10), wherein the housing is unrotatably connected at one of the opposite end portions thereof to the proximal end of one of the pair of stabilizer bars and rotatably supported by the other of the opposite end portions thereof to the other of the pair of stabilizer bars.

In the above-indicated form (11), the actuator is supported at the opposite end portions thereof by the pair of stabilizer bars. In this form, the housing is arranged to be unrotable relative to one of the pair of stabilizer bars and to be rotatable relative to the other of the pair of stabilizer bars, whereby the pair of stabilizer bars are configured to be twisted.

(12) The stabilizer apparatus according to any one of the above forms (1)-(11),
wherein the housing is unrotatably connected, at the other of the opposite end portions thereof where the decelerator is disposed, to said one of the pair of stabilizer bars,
wherein the motor has a hollow structure, and
wherein the other of the pair of stabilizer bars is inserted into the housing from said one of the opposite end portions where the motor is disposed and connected to the output portion of the decelerator through the motor.

In the stabilizer apparatus according to the form (12), the above-indicated other of the pair of stabilizer bars can be made long, as compared with another stabilizer apparatus in which one of stabilizer bars is fixed to the motor-side end portion while the other of stabilizer bars is inserted from the decelerator-side end portion. Therefore, the spring constant in the twisting direction of the pair of stabilizer bars can be made smaller than that in the above-indicated another stabilizer apparatus in which the other of stabilizer bars is short. The above-indicated spring constant in the twisting direction of the pair of stabilizer bars can be considered as a spring constant of one integral stabilizer bar where the pair of stabilizer bars are regarded as one integral stabilizer bar. Further, where the spring constant in the twisting direction of the pair of stabilizer bars are made equal to that in the above-indicated another stabilizer apparatus in which the other of stabilizer bars is short, by increasing diameters of the pair of stabilizer bars, for instance, the flexural rigidity of each of the pair of stabilizer bars can be increased, as compared with the above-indicated another stabilizer apparatus. In this case, the amount of bending deformation of each of the pair of stabilizer bars between the housing and the corresponding support portion is decreased, whereby the vibration of the actuator can be effectively reduced or restrained. The stabilizer apparatus according to the form (12) can be relatively easily installed on a conventional vehicle equipped with one stabilizer bar without the actuator as the drive source for the stabilizer apparatus, for the following reasons: A difference between the total length of the two torsion portions of the pair of stabilizer bars in the apparatus according to the form (12) and the length of the torsion portion of the conventional one stabilizer bar can be made small. Accordingly, the stabilizer apparatus according to the form (12) can be installed on the conventional vehicle without largely changing or without changing the design of the pair of stabilizer bars (such as the diameters, shapes, etc., of the stabilizer bars).

(13) A stabilizer apparatus for a vehicle comprising:
a stabilizer bar rotatably supported by two supporting portions which are disposed on a body of the vehicle to be away from each other; and
an actuator which includes: (a) a housing having a generally cylindrical shape; (b) a motor disposed inside the housing near to one of opposite end portions thereof and (c) a decelerator disposed inside the housing near to the other of the opposite end portions thereof so as to be connected to the motor and having an output portion, the housing being unrotatably connected, at said one of opposite end portions thereof, to the stabilizer bar while the output portion of the decelerator is connected to the stabilizer bar, thereby giving the stabilizer bar torsional torque, the actuator being arranged such that the motor and the decelerator are spaced apart from each other and further including a drive-force transmitting member via which the decelerator is connected to the motor and which is disposed between the motor and the decelerator for transmitting a drive force of the motor to an input portion of the decelerator.

The arrangement according to the mode (13) can be regarded as an arrangement in which the pair of stabilizer bars have an integral unitary structure. In this mode (13), too, by disposing the motor and the decelerator to be spaced apart from each other, each of the distances between opposite end portions of the actuator and the corresponding two support portions is made small, whereby the vibration of the actuator can be easily reduced. In the stabilizer apparatus according to the mode (13), the stabilizer bar functions just as the conventional one stabilizer bar functions, in a state in which no power is supplied to the motor and the decelerator is not operated. In the stabilizer apparatus according to this mode (13), the stabilizer bar is connected, at one portion thereof, unrotatably relative to the housing and connected, at another portion thereof, to the output portion of the decelerator. Accordingly, the stabilizer bar can be twisted, as needed, by rotating the above-indicated another portion thereof connected to the decelerator, relative to the housing.

The arrangement according to the form (13) may employ any of the features according to the above-described forms (2)-(10). In this form (13), the stabilizer bar is not necessarily constituted by a single component, but may be constituted by assembling a plurality of components. For instance, a portion of the stabilizer bar interposed between the two support portions (i.e., a portion functioning as a torsion portion) may be constituted by a single component to which separate components (such as those functioning as the arm portions) may be fixed.
The invention also provides a vehicle comprising the stabilizer apparatus.

A better understanding of the present invention will be better understood by reading a following detailed description of illustrative embodiments of the invention, when considered in connection with the accompanying drawings, in which:
Fig. 1 is a schematic view showing a vehicle suspension system equipped with a stabilizer apparatus according to a first embodiment of the invention;
Fig. 2 is a front elevational view in cross section schematically showing an actuator as one component of the stabilizer apparatus of Fig. 1;
Fig. 3 is a front elevational view in cross section schematically showing an actuator according to a second embodiment of the invention;
Fig. 4 is a schematic view showing a vehicle suspension system equipped with a stabilizer apparatus according to the second embodiment; and
Fig. 5 is a schematic view showing a stabilizer apparatus equipped with a conventional actuator in which a motor and a decelerator are disposed adjacent to each other.

### DETAILED DESCRIPTION OF THE EMBODIMENTS

There will be described in detail one embodiment of this invention and a modified embodiment thereof, referring to the drawings. It is to be understood, however, that the present invention is not limited to the following embodiments, but the present invention may be embodied with various changes and modifications, such as those described in the SUMMARY OF THE INVENTION, which may occur to those skilled in the art.

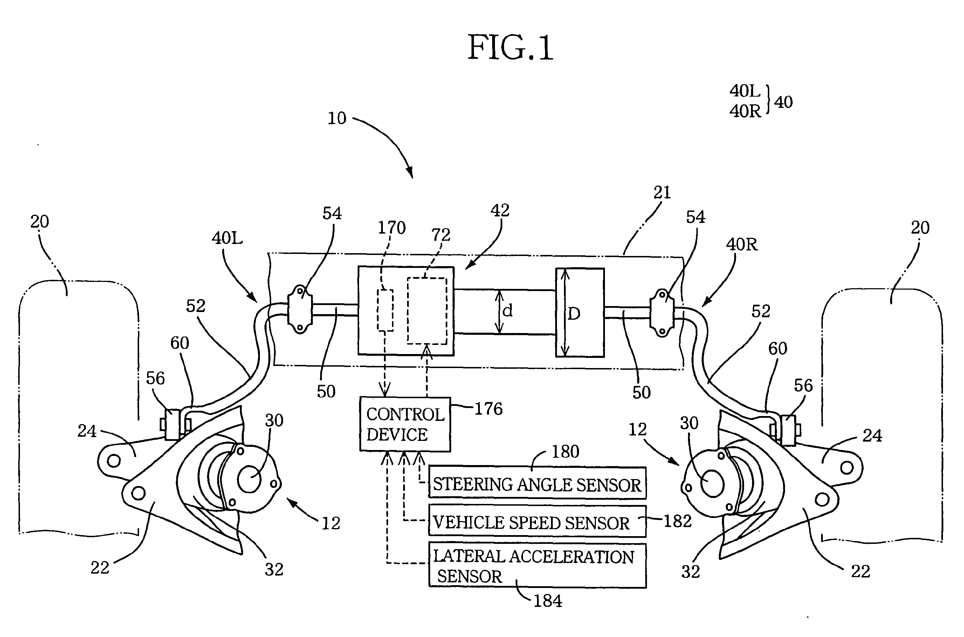

1. First embodiment
Fig. 1 schematically shows a portion of a vehicle suspension system which suspends front wheels and which is equipped with a stabilizer apparatus according to a first embodiment of the invention. The suspension system includes two stabilizer apparatuses 10 which are provided respectively on a front side and a rear side of the vehicle and two pairs of suspension apparatuses 12 one pair of which is provided for one stabilizer apparatus 10. The suspension apparatuses 12 of Fig. 1 respectively hold a front right and a front left wheels 20 such that the wheels 20 approach toward and separate from a body 21 of the vehicle in a substantially vertical direction, and reduce or restrain shaking of the vehicle body 21 (such as bouncing, pitching, swinging and the like) and a change in the attitude of the vehicle body 21, due to running over bumpy or rough roads or steering of the vehicle. In the present embodiment, each suspension apparatus 12 includes an upper arm 22 and a lower arm 24 each of which is rotatably connected at one end thereof to the vehicle body 21 and connected at the other end thereof to the corresponding wheel 20, strictly speaking, to a device that holds the wheel 20. Each of the upper and lower arms 22, 24 is pivotably moved or swung about the above-indicated one end (vehicle-body-side end) thereof while the other end (wheel-side end) thereof is moved in the vertical direction relative to the vehicle body 21, as the corresponding wheel 20 approaches toward and separates from the vehicle body 21. Each suspension apparatus 12 further includes a shock absorbing mechanism 30 and a spring mechanism 32 which are provided between the vehicle body 21 and the lower arm 24. The shock absorbing mechanism 30 is connected at its upper end to the vehicle body 21 and at its lower end to the lower arm 24. The suspension apparatus 12 is arranged such that the vehicle body 21 is elastically supported owing to the biasing force of the spring mechanism 32 while generating a damping force with respect to the relative displacement between the vehicle body 21 and the wheels 20 toward and away from each other, by means of the shock absorbing mechanism 30, so that the shaking of the vehicle body 21 is damped.

2. Stabilizer apparatus
In the present embodiment, because the two stabilizer apparatuses 10 respectively provided on the front side and the rear side of the vehicle are identical in construction, the explanation will be made with respect to only one of the stabilizer apparatuses 10 provided on the front side of the vehicle (Fig. 1). The stabilizer apparatus 10 includes a pair of stabilizer bars 40 and an actuator 42 which connects the pair of stabilizer bars 40 so as to be rotatably driven relative to each other. Each stabilizer bar 40 has: a torsion portion 50 connected to the actuator 42; and an arm portion 52 extending from one end of the torsion portion 50 nearer to the wheel 20 toward in a rearward direction of the vehicle. Two support members 54 (each functioning as a support portion) are disposed on the vehicle body 21 so as to be away from each other in a width direction of the vehicle. The torsion portions 50 are supported by the respective support members 54 to be rotatable about their own axes. An arm holding member 56 is fixed to each of the lower arms 24, and the arm portion 52 of each stabilizer bar 40 is fixed at its leading end 60 to the arm holding member 56. Namely, in accordance with the swinging movement of the lower arm 24, the leading end 60 of the arm portion 52 is moved vertically relative to the vehicle body 21 and the stabilizer bar 40 is rotated about the axis of the torsion portion 50. In the present embodiment, the pair of stabilizer bars 40 consist of a right-side bar 40R positioned on the right side of the vehicle and a left-side bar 40L positioned on the left side of the vehicle.

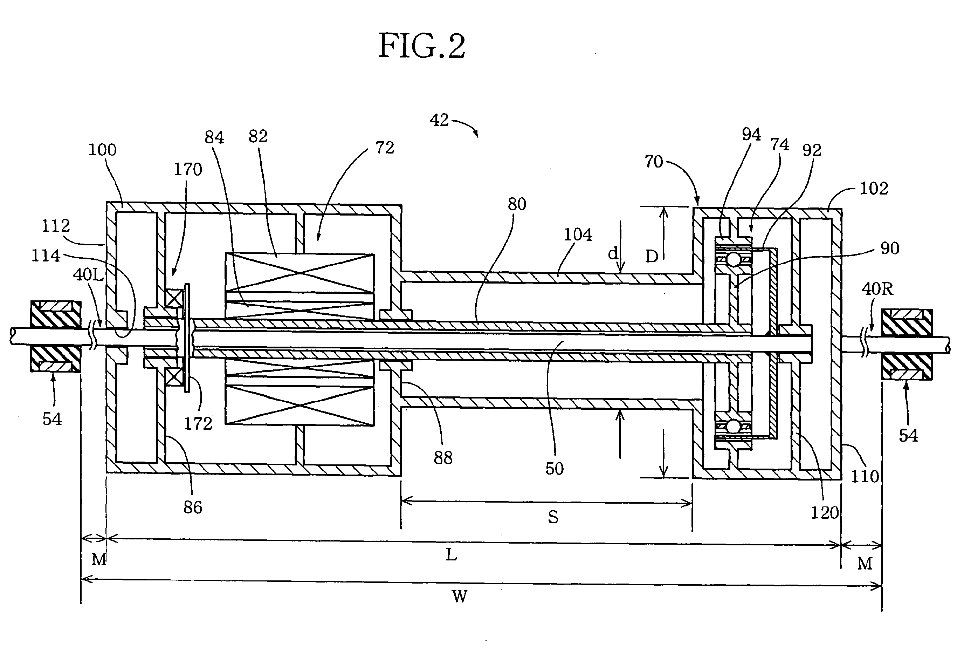

Fig. 2 schematically shows a structure of the actuator 42. The actuator 42 includes: a housing 70; an electric motor 72 (hereinafter may be simply referred to as "the motor 72"); and a decelerator 74 connected to the motor 72 for decelerating rotation of the motor 72. In the present embodiment, the motor 72 is disposed in an inside of the housing 70 on the left side of the vehicle near to one of opposite end portions of the housing 70, and includes: a stator 82 held by the housing so as to be immovable in the axial direction of the housing 70 and unrotatable relative to the housing 70; and a rotor 84 rotatably held by the housing 70. The housing 70 has shaft supporting walls 86, 88 formed therein. A hollow drive shaft 80 is rotatably held by the shaft supporting walls 86, 88 at mounting holes respectively formed in the shaft supporting walls 86, 88. The rotor 84 is fixed to the periphery of the drive shaft 80.

In the present embodiment, the decelerator 74 is constituted by a wave gear mechanism called as "HARMONIC DRIVE®" (trademark), for instance, and disposed in an inside of the housing 70 on the right side of the vehicle near to the other of the opposite end portions of the housing 70. The wave gear mechanism includes a wave generator 90, a flexible gear 92, and a ring gear 94. Because the structure of the wave gear mechanism is known, a detailed illustration of which is not given. The wave generator 90 includes an oval cam and ball bearings fitted on the periphery of the cam, and is fixed to the peripheral portion of the drive shaft 80 as an input shaft. The flexible gear 92 is a container-like (e.g., a bowl-like or cup-like) elastic member. A plurality of teeth are formed on the outer circumference of the open end portion of the container-like flexible gear 92. The ring gear 94 is a generally ring-like member and is fixed to the housing 70. A plurality of teeth are formed on the inner circumference of the ring gear 92. The number of teeth formed on the inner circumference of the ring gear 94 is slightly larger (e.g., larger by two) than the number of teeth formed on the outer circumference of the flexible gear 92. The flexible gear 92 is elastically deformed into an oval shape by the wave generator 90, and meshes the ring gear 94 at portions thereof corresponding to opposite ends of the long axis of the oval while the teeth of the flexible gear 92 are totally away from the ring gear 94 at portions thereof corresponding to opposite end of the short axis of the oval. After one rotation of the wave generator 90 (i.e., after rotation of the wave generator 90 by 360°), the flexible gear 92 is rotated in a direction opposite to the rotating direction of the wave generator 90 by an amount corresponding to the difference in the number of teeth between the wave generator 90 and the flexible gear 92. Namely, in the present embodiment, the wave gear mechanism is arranged to decelerate rotation of the drive shaft 80 and output a drive force of the motor 72 from the flexible gear 92. In other words, the flexible gear 92 is rotated relative to the housing 70 by the drive force of the motor 72. In the present embodiment, the wave generator 90 functions as an input portion to which the drive force of the motor 72 is transmitted while the flexible gear 92 functions as an output portion from which the drive force of the motor 72 is outputted.

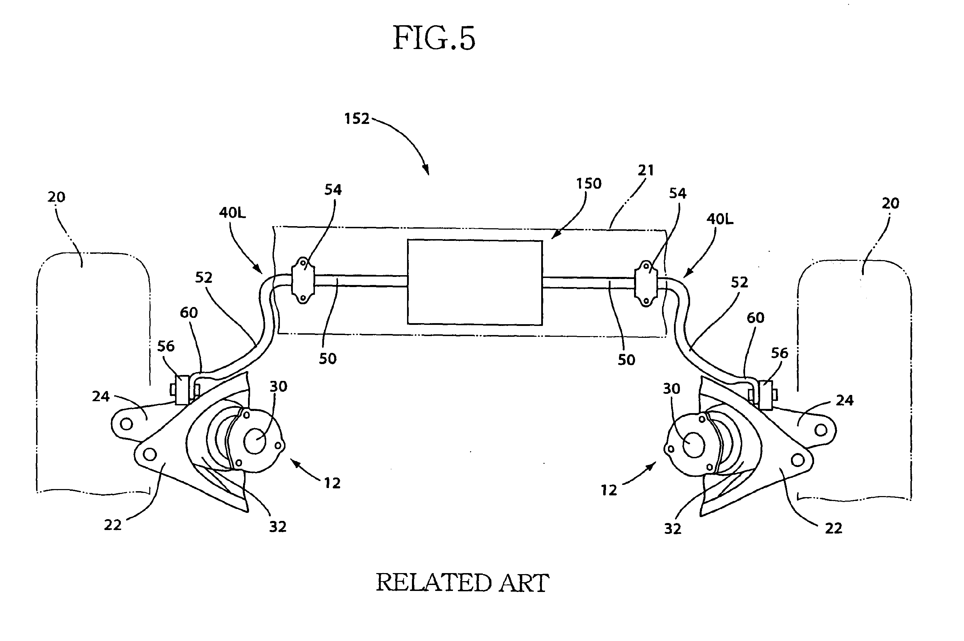

The housing 70 has a generally cylindrical shape, and includes: a motor housing portion 100 in which the motor 72 is disposed; a decelerator housing portion 102 in which the decelerator 72 is disposed; and a connecting portion 104 which connects the motor housing portion 100 and the decelerator housing potion 102. The connecting portion 104 has an outside diameter smaller than an outside diameter of the motor housing portion 100 and an outside diameter of the decelerator housing portion 102. Thus, the connecting portion 104 functions as a small-diameter portion of the housing 70. In this embodiment, the outside diameter of the motor housing portion 100 and the outside diameter of the decelerator housing portion 102 are equal to each other, and the outside diameter "d" of the connecting portion 104 is not greater than 50% of the outside diameter "D" of the motor housing portion 100 and the decelerator housing portion 102. The connecting portion 104 has a length "S" which is not smaller than 40% of a length "L" of the housing 70 and which is not smaller than 30% of a distance "W" between the two support members 54. In this arrangement, therefore, the length of the housing 70 is larger than a conventional housing in which the motor 72 and the decelerator 74 are disposed adjacent to each other, and the heavy components, i.e., the motor 72 and the decelerator 74 are disposed while being distributed in the axial direction of the housing 70. Further, each of distances "M" between the opposite end portions of the housing 70 and the corresponding support members 54 is not greater than 15 % of the distance "W" between the two support members 54. Accordingly, as compared with the conventional arrangement in which the motor 72 and the decelerator 74 are disposed adjacent to each other (Fig. 5), each of the distances "M" between the opposite end portions of the housing 70 and the corresponding support members 54 is made smaller. While the distances "M" between the opposite end portions of the housing 70 and the corresponding support members 54 are made equal to each other in the present embodiment, the distances "M" may be made different from each other. In this embodiment, a distance between the motor 72 and the decelerator 74 can be considered as a distance between the motor housing portion 100 and the decelerator housing portion 102, and is therefore equal to the length "S" of the connecting portion 104.

At a motor-side end portion 112 of the housing 70 which is one of the opposite end portions of the housing 70 on the side of the motor housing portion 100, there is formed a mounting hole 114 through which the left-side bar 40L is inserted. The left-side bar 40L extends through the motor 72 (in detail, through the hollow portion of the drive shaft 80) and is unrotatably fixed to a bottom portion of the flexible gear 92 while extending therethrough. In the decelerator housing portion 102, there is provided a bar supporting wall 120 by which the left-side bar 40L is rotatably supported. In detail, the bar supporting wall 120 is formed with a mounting hole at which one end of the left-side bar 40L is rotatably supported. As shown in Fig. 2, there is a predetermined clearance between the inner circumferential surface of the drive shaft 80 and the outer circumferential surface of the torsion portion 50 of the left-side bar 40L. On the other hand, to a decelerator-side end portion 110 of the housing 70 which is the other of the opposite end portions of the housing 70 on the side of the decelerator housing portion 110, the right-side bar 40R is fixed.

In the present embodiment, the right-side bar 40R is fixed to the housing 70 and the left-side bar 40L is fixed to the flexible gear 92 of the decelerator 74. By the drive force of the motor 72, the flexible gear 92 and the housing 70 are rotated relative to each other, whereby the right-side bar 40R and the left-side bar 40L are rotated relative to each other, in other words, the pair of stabilizer bars 40 are twisted. The force generated by the twisting of the stabilizer bars 40 acts as a force for pushing down or lifting up the wheels 20, in other words, a force for lowering or raising portions of the vehicle body where the suspension apparatuses 12 are disposed. Namely, in the stabilizer apparatus 10 according to this embodiment, the actuator 42 is operated to change the twisting amount of the pair of stabilizer bars 40, thereby changing the attitude of the vehicle body.

In the present embodiment, the actuator 42 is not fixed directly to the vehicle body 21. In detail, the decelerator-side end portion 110 of the housing 70 is fixed to the right-side bar 40R while the motor-side end portion 112 of the housing 70 is supported at its mounting hole 114 by the left-side bar 40L so as to be rotatable together with the same 40L. Namely, in the present embodiment, the actuator 42 is supported by the pair of stabilizer bars 40. Therefore, the actuator 42 vibrates due to shaking of the vehicle body. In the present actuator 42, however, the motor 72 and the decelerator 74 are disposed so as to be spaced apart from each other as described above, whereby the vibration of the actuator 42 due to the shaking of the vehicle body (e.g., the amplitude of the actuator 42) is decreased. In the stabilizer apparatus 10 according to this embodiment, the axial length of the actuator 42 is longer and each of the distances between the opposite end portions of the actuator 42 and the corresponding support members 54 are smaller, than those of an actuator 150 of a stabilizer apparatus 152 (Fig. 5) in which the motor 72 and the decelerator 74 are disposed adjacent to each other.

Because the actuator 42 is disposed at a lower portion of the vehicle body, a ground clearance of the vehicle body at a portion where the actuator 42 is disposed is small. Accordingly, the actuator 42 may be an obstacle to running of the vehicle in a case where the vehicle travels over a rutted road, for instance. In the actuator 42 according to the present embodiment, however, the outside diameter of the connecting portion 104 is made small as described above, whereby the ground clearance of the vehicle body at a portion thereof which is middle between the right and left wheels 20 is made large. Therefore, there is assured a clearance between the vehicle body at that portion and a ridge formed in the middle of the rutted road, so that the deterioration in the running ability of the vehicle is prevented. Further, the reduction in the outside diameter of the connecting portion 104 is effective to reduce the weight of the actuator 42, resulting in a decrease in the vibration of the same 42.

In the stabilizer apparatus 10 according to the present embodiment, the left-side bar 40L extends through the motor housing portion 100 and the connecting portion 104, and is connected to the decelerator 74. Accordingly, the length of the torsion portion 50 of the left-side bar 40L is made large, so that the flexural rigidity of the pair of stabilizer bars 40 can be increased, as compared with a pair of stabilizer bars in which the length of the torsion portion 50 is small, where a spring constant in the twisting direction of the pair of stabilizer bars 40 in which the length of the torsion portion 50 is made large is the same as that of the pair of stabilizer bars in which the length of the torsion portion 50 is small. Therefore, it is possible to reduce or restrain the vibration of the actuator 42

In the motor housing portion 100, a rotational position sensor 170 as a rotational-position detecting device is provided on one of opposite sides of the shaft supporting wall 86 nearer to the motor 72. The rotational position sensor 170 detects a rotational position of the rotor 84 relative to the housing 70, based on a rotational position of a code disc 172 fixed to the periphery of the drive shaft 80. A relative rotational amount between the ring gear 94 and the flexible gear 92 can be obtained based on the detected rotational position. Consequently, a relative rotational amount between the housing 70 (the right-side bar 40R of the pair of stabilizer bars 40) and the left-side bar 40L can be obtained.

In the present embodiment, the vehicle suspension system is equipped with a control device 176 (Fig. 1) for controlling the stabilizer apparatus 10 (in detail, for controlling the actuator 42). The control device 176 is constituted principally by a computer. To the control device 176, there are connected: the above-described rotational position sensor 170; a steering angle sensor 180 as a steering-angle detecting device; a vehicle speed sensor 182 as a vehicle-speed detecting device; and a lateral acceleration sensor 184 as a lateral-acceleration detecting device. Further, the control device 176 has a drive circuit to which the motor 72 of the actuator 42 is connected. A ROM of the control device 176 stores various data and various programs such as a stabilizer-apparatus control program.

In the vehicle suspension system of the present embodiment, the control device 176 controls the actuator 42 so as to generate moment against rolling moment of the vehicle body 21 received during turning of the vehicle, thereby restraining the rolling of the vehicle body 21. In controlling the actuator 42, the lateral acceleration is directly detected by the lateral acceleration sensor 184, the rolling moment is calculated based on the detected lateral acceleration, and the twisting angle of the stabilizer bars 40, in other words, the relative rotation angle between the right-side bar 40R and the left-side bar 40L, required for preventing the rolling of the vehicle body 21 against the rolling moment is determined. The rolling moment may be calculated on estimated lateral acceleration which is estimated based on detecting results of the steering angle sensor 180 and the vehicle speed sensor 182, respectively.

During a time period in which the lateral acceleration is zero, no electric current is supplied to the actuator 42 and the pair of stabilizer bars 40 are allowed to freely rotate relative to each other. In the state in which the lateral acceleration is zero, therefore, where only one of the right and left wheels 20 runs onto a ridge formed on the road surface during traveling straightforward, for instance, that one wheel 20 is likely to be easily raised, so that the attitude of the vehicle body can be kept with high stability.

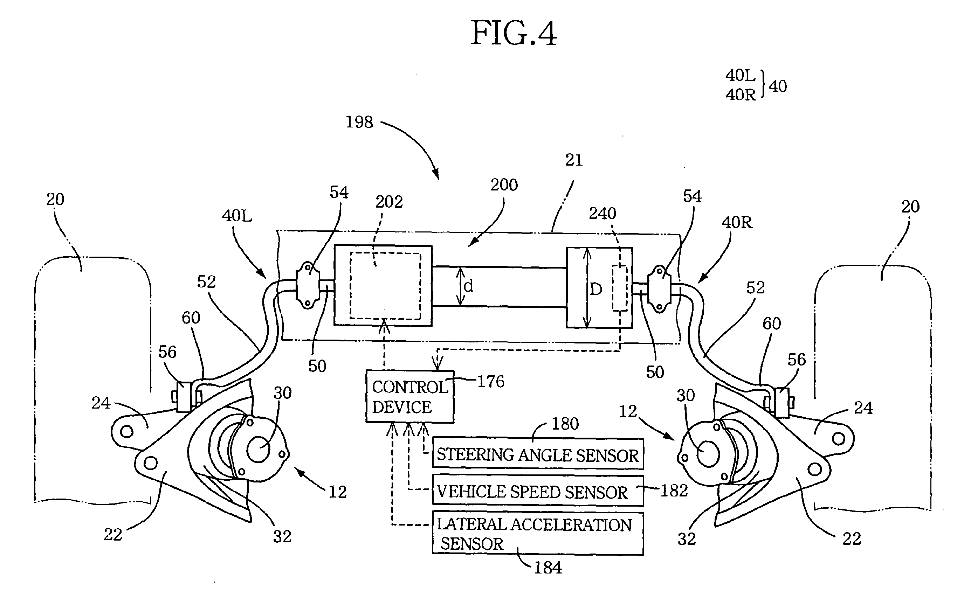

3. Second embodiment
While the wave gear mechanism is employed as the decelerator 74 in the illustrated first embodiment, a planetary gear mechanism may be employed as the decelerator. There will be explained a stabilizer apparatus 198 (Fig. 4) in which the planetary gear mechanism is employed as the decelerator. Because a vehicle suspension system according to this second embodiment is generally identical in construction with that of the illustrated first embodiment, only portions of the construction of the system different from those of the first embodiment will be explained. Further, the same reference numerals as used in the first embodiment are used to identify the corresponding components, and a detailed explanation of which is dispensed with.

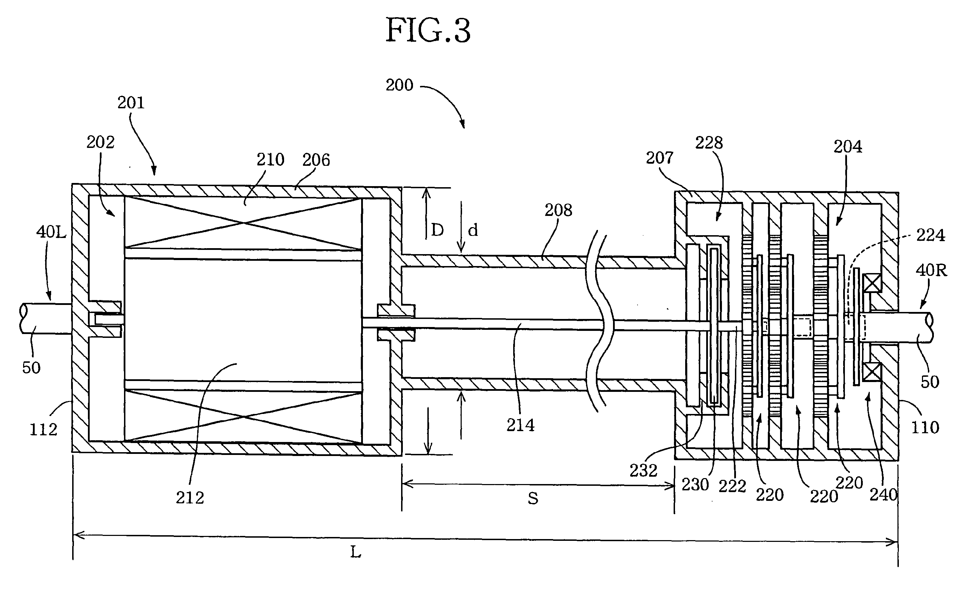

An actuator 200 (Fig. 3) of the stabilizer apparatus 198 includes: a housing 201; an electric motor 202 (hereinafter may be simply referred to as "the motor 202"); and a decelerator 204 which is connected to the motor 202 for decelerating rotation of the motor 202 and transmitting it to the right-side bar 40R. The housing 201 includes: a motor housing portion 206; a decelerator housing portion 207; and a connecting portion 208 connecting the motor housing portion 206 and the decelerator housing portion 207. In the motor housing portion 206, the motor 202 is disposed which includes: a stator 210 held by the motor housing portion 206 so as to be immovable in the axial direction and unrotatable relative to the motor housing portion 206; and a rotor 212 rotatably held by the motor housing portion 206. The rotor 212 is fixed to a drive shaft 214 which is rotatably held by the motor housing portion 206. In the meantime, in the decelerator housing portion 207, the decelerator 204 is disposed which is equipped with a planetary gear mechanism 220 including a plurality of gear sets arranged in series (three gear sets in this embodiment). An input shaft 222 of the decelerator 204 functioning as an input portion is connected to the drive shaft 214 while an output shaft 224 thereof functioning as an output portion is connected to one end of the right-side bar 40R.

In the arrangement described above, the actuator 200 operates, so that the right-side bar 40R is rotated relative to the housing 201. Because the left-side bar 40L is fixed to the motor-side end portion 112 which is one of opposite end portions of the housing 201 on the side of the motor housing portion 206, the right-side bar 40R and the left-side bar 40L are rotated relative to each other, namely, twisted, upon operation of the actuator 200. A force generated by the twisting acts as a force for pushing down or lifting up the left and right wheels 20, so that the attitude of the vehicle body is changed.

The actuator 200 is equipped with a brake 228 that is disposed in an end portion of the decelerator housing portion 207 nearer to the connecting portion 208. The brake 228 in the present embodiment is an electromagnetic clutch including a disc rotor 230 and a stator 232 which can inhibit rotation of the rotor 230. In a normal state, the disc rotor 230 is prevented from rotating relative to the stator 232. When energized, the disc rotor 230 is allowed to rotate. The input shaft 222 of the decelerator 204 and the drive shaft 214 of the motor 202 are fixed to the disc rotor 230 on respective opposite sides thereof. Where the motor 202 is driven with the brake 228 placed in its released state by energization, the rotation of the motor 202 is decelerated by the decelerator 204 and is transmitted to the right-side bar 40R. Where the brake 228 is placed in its operated state by de-energization and the motor 202 is placed in its non-driven state, a relative rotational position of the ends of the respective torsion portions 50 of the pair of stabilizer bars 40 is maintained.

The actuator 200 is equipped with a rotational position sensor 240 that is disposed in one end portion of the decelerator housing portion 207 nearer to the decelerator-side end portion 110. The rotational position sensor 240 is for detecting a rotational position of one end of the right-side bar 40R relative to the housing 201. On the basis of the detected relative rotational position, a relative rotation amount between the right-side bar 40R and the left-side bar 40L can be obtained.

In this embodiment, the connecting portion 208 functions as a small-diameter portion and has an outside diameter "d" which is not greater than 50% of an outside diameter "D" of the motor housing portion 206 and the decelerator housing portion 207. The connecting portion 208 has a length "S" which is not smaller than 45% of a length "L" of the housing 201 and which is not smaller than 40% of a distance "W" between the two support members 54. Each of distances (M) between the opposite end portions of the housing 201 and the corresponding support members 54 is not greater than 5% of the distance "W" between the two support portions 54, as shown in Fig. 4. In Fig. 3, "W" and "M" are not illustrated.

4. Modified embodiments
In the illustrated first and second embodiments, the manner of connection between the pair of stabilizer bars 40 and the actuator and the construction of the decelerator are different. It may be possible that the actuator 42 in the first embodiment employs the planetary gear mechanism and the actuator 200 of the second embodiment employs the wave gear mechanism. Described more specifically, in the first embodiment, the planetary gear mechanism having a hollow structure is disposed in the decelerator housing portion 102 such that its input shaft is connected to the drive shaft 80 and its output shaft is connected to the left-side bar 40L, whereby the rotation of the motor 72 is decelerated and transmitted to the left-side bar 40L. In the second embodiment, on the other hand, the wave gear mechanism is disposed in the decelerator housing portion 207 such that the wave generator 90 is connected to the drive shaft 214 and the flexible gear 92 is connected to the right-side bar 40R, whereby the rotation of the motor 202 is decelerated and transmitted to the right-side bar 40R.

In the first and second embodiments, the manner of connection between the pair of stabilizer bars 40 and the actuator may be made different. For instance, the actuator 42 of the first embodiment may be connected to the pair of stabilizer bars 40 in the following manner: The mounting hole 114 is formed in the decelerator-side end portion 110. The left-side bar 40L is fixed to an outer wall of the motor-side end portion 112, and the right-side bar 40R is inserted from the decelerator-side end portion 110 through the mounting hole 114 formed in the decelerator-side end portion 110, and fixed to the flexible gear 92 while being fixed to an inner wall of the motor-side end portion 112 through the motor 72. In this arrangement, while the decelerator 74 is not operated, the stabilizer apparatus operates in substantially the same way as a stabilizer apparatus operates in which is provided one stabilizer bar. For decreasing the rolling amount of the vehicle body during turning, for instance, a portion of the right-side bar 40R fixed to the flexible gear 92 is rotated relative to the housing by the drive force of the motor, thereby increasing the elastic force generated by the pair of stabilizer bars. In the meantime, where a difference in height between the left and right wheels 20 increases in a condition in which one of the wheels 20 runs onto the ridge formed on the road surface, for instance, the elastic force generated by the pair of stabilizer bars may be decreased. In this arrangement, since each of the pair of stabilizer bars is fixed to the motor-side end portions 112, the rigidity of the stabilizer apparatus can be increased without changing the spring constant of the pair of stabilizer bars in the twisting direction, whereby the vibration of the actuator can be effectively reduced.

The arrangement in which each of the pair of stabilizer bars is fixed to the motor-side end portion 112 may be modified as follows: There are formed two mounting holes 114 respectively in the motor-side end portion 112 and the decelerator-side end portion 110, and a torsion portion of one stabilizer bar penetrates the entirety of the actuator. In this case, the stabilizer apparatus may be arranged such that the pair of stabilizer bars are constituted by integrally formed one stabilizer bar. In this arrangement, the torsion portion may be unrotatably supported by the housing at the motor-side end portion 112 and rotatably supported by the housing at the decelerator-side end portion 110.

In the illustrated embodiments, the drive force of the motor is transmitted to the decelerator through the drive shaft. Accordingly, it may be understood that the drive shaft constitutes the drive-force transmitting member. Where the motor and the decelerator are disposed adjacent to each other, however, the drive shaft may be short. In this respect, where the motor and the decelerator are disposed to be spaced apart from each other according to the invention, it may be understood that a portion of the drive shaft between the motor and the decelerator constitutes the drive-force transmitting member.

## Claims

1. A stabilizer apparatus (10; 198) for a vehicle comprising: a pair of stabilizer bars (40, 40L, 40R) which are rotatably supported by respective two support portions (54) for disposal on a body (21) of the vehicle away from each other and which are disposed such that proximal ends of the pair of stabilizer bars are opposed to each other; and an actuator (42; 200) which includes: (a) a housing (70; 201) having a generally cylindrical shape; (b) a motor (84; 202) disposed inside the housing near to one of opposite end portions thereof, and (c) a decelerator (74; 204) which is disposed inside the housing near to the other of the opposite end portions thereof so as to be connected to the motor and which has an output portion (92; 224), the housing being unrotatably connected to the proximal end of one of the pair of stabilizer bars while the output portion of the decelerator is connected to the proximal end of the other of the pair of stabilizer bars, thereby enabling the pair of stabilizer bars to be connected to each other by the actuator to be rotatably driven relative to each other,
the motor and the decelerator being spaced apart from each other with a predetermined spacing distance therebetween.

2. The stabilizer apparatus according to claim 1, wherein the actuator further includes a drive-force transmitting member (80; 208) via which the decelerator is connected to the motor and which is disposed between the motor and the decelerator for transmitting a drive force of the motor to an input portion (90; 222) of the decelerator.

3. The stabilizer apparatus according to claim 1 or 2, wherein the spacing distance between the motor and the decelerator is not smaller than 25% of a length (L) of the housing.

4. The stabilizer apparatus according to any one of claims 1 to 3, wherein the spacing distance between the motor and the decelerator is not smaller than 15% of a distance (W) by which the two support portions are away from each other.

5. The stabilizer apparatus according to any one of claims 1 to 4, wherein the housing includes: a motor housing portion (100; 206) in which the motor is disposed; a decelerator housing portion (102; 207) in which the decelerator is disposed; and a small-diameter portion (104; 208) located between the motor housing portion and the decelerator housing portion and having an outside diameter (d) smaller than outside diameters (D) of the motor housing portion and the decelerator housing portion.

6. The stabilizer apparatus according to claim 5, wherein the outside diameter of the small-diameter portion is smaller than outside diameters of the motor and the decelerator.

7. The stabilizer apparatus according to claim 5 or 6, wherein the outside diameter of the small-diameter portion is not greater than 75% of a smaller one of the outside diameters of the motor housing portion and the decelerator housing portion.

8. The stabilizer apparatus according to any one of claims 5 to 7, wherein the small-diameter portion has a length (S) which is not smaller than 25% of a length (L) of the housing.

9. The stabilizer apparatus according to any one of claims 5 to 7, wherein the small-diameter portion has a length (S) which is not smaller than 15% of a distance by which the two support portions are away from each other.

10. The stabilizer apparatus according to any one of claims 1 to 9, wherein each of distances (M) between the opposite end portions of the housing and the corresponding support portions is not greater than 20% of a distance by which the two support portions are away from each other.

11. The stabilizer apparatus according to any one of claims 1 to 10, wherein the housing is unrotatably connected at one of the opposite end portions thereof to the proximal end of one of the pair of stabilizer bars and rotatably supported at the other of the opposite end portions thereof by the other of the pair of stabilizer bars.

12. The stabilizer apparatus according to any one of claims 1 to 11,
wherein the housing is unrotatably connected, at the other of the opposite end portions thereof where the decelerator is disposed, to said one of the pair of stabilizer bars,
wherein the motor has a hollow structure, and
wherein the other of the pair of stabilizer bars is inserted into the housing from said one of the opposite end portions where the motor is disposed and connected to the output portion of the decelerator through the motor.
